# DEMANDE DE BREVET EUROPEEN

(11) **EP 1 375 994 A1**
(43) Date de publication de la demande: **02.01.2004**
(21) Numéro de dépôt: 03291416.0
(22) Date de dépôt: 13.06.2003
(51) Int. Cl.: F16L 37/18, B60S 5/04, F16L 37/05

(54) **Raccord pour dispositif de gonflage compatible avec plusieurs types de valve**

(30) Priorité: 21.06.2002 FR 0207702
(71) Demandeur: Zefal S.A., 45150 Jargeaux (FR)
(72) Inventeur: Delorme, Alain, 45530 Sury aux Bois (FR)
(74) Mandataire: Pontet, Bernard

(57) **Abrégé**

Raccord (100) pour raccorder automatiquement un dispositif de gonflage sur une valve, comprenant une butée creuse (8) pour manoeuvrer des moyens d'ouverture de la valve, un joint (3) élastiquement déformable, caractérisé en ce que le joint comprend une lèvre (35) adaptée pour:
- immobiliser la butée lors du gonflage, si ladite valve est d'un premier type; ou,
- assurer en se déformant une étanchéité autour de la valve, lors du gonflage, si ladite valve est d'un deuxième type.

Ce raccord est particulièrement adapté pour équiper une pompe à vélo.

## Description

La présente invention concerne un raccord pour dispositif de gonflage compatible avec plusieurs types de valve sans intervention manuelle, notamment pour un dispositif de gonflage de type pompe à vélo.

Il existe plusieurs types de valve utilisés pour le gonflage des pneus de vélos. Notamment, deux types sont couramment utilisés et sont connus sous le nom de valves "Vélo", et de valves "Auto". Les valves Vélo sont des valves de petit diamètre (correspondant à un trou de jante de 6,5 mm environ) et définies par la norme française NF R99-035 de mai 1974, notamment utilisées pour les vélos dits de course, aux jantes étroites. Les valves Auto sont quant à elles des valves d'un diamètre plus important (correspondant à un trou de jante de 9 mm environ) et définies par la norme française NF R99-031 de mai 1974, notamment utilisées pour des vélos de type "tout chemin", des vélomoteurs ou des automobiles. Outre leur forme, ces valves ont aussi des fonctionnements différents.

Plusieurs dispositifs existent pour gonfler des pneus équipés de l'une ou l'autre des valves. Mais ces dispositifs ont pour inconvénient de nécessiter de déterminer préalablement le type de valve, puis d'adapter le dispositif au type de valve utilisé par une action volontaire de l'utilisateur, par exemple en en changeant ou en en modifiant un moyen de raccordement sur la valve. Or les utilisateurs de pompes recherchent des pompes équipées de moyens de raccordement dits "intelligents", c'est à dire qui permettent de mettre en place la pompe sans se soucier du type de valve dont un pneu est équipé.

Le but de l'invention est de proposer un raccord de dispositif de gonflage compatible avec plusieurs types de valve, par exemple s'adaptant sans intervention de l'utilisateur aux valves Vélo et aux valves Auto.

Selon l'invention, un tel raccord d'un dispositif de gonflage sur une valve de pneu comprend une butée creuse pour manoeuvrer des moyens d'ouverture de la valve et un joint élastiquement déformable. Ce raccord est caractérisé en ce que le joint comprend une lèvre adaptée pour immobiliser la butée lors du gonflage, si ladite valve est d'un premier type, ou, assurer en se déformant une étanchéité autour de la valve, lors du gonflage, si ladite valve est d'un deuxième type. Le premier type peut correspondre à une valve auto et le second à une valve vélo.

Si ladite valve est du premier type, la lèvre peut aussi assurer une étanchéité entre un bord intérieur de la valve et la butée, une arrivée d'air depuis le dispositif de gonflage jusqu'à la valve se faisant au travers de la butée creuse.

Le raccord peut comprendre avantageusement un conduit, pour l'air, dans lequel la butée est montée mobile. Lorsque aucune valve n'est raccordée, la lèvre entoure la butée dans une position initiale. Le raccord comprend alors en outre des moyens pour escamoter la butée dans le conduit lors d'un raccordement à une valve du deuxième type, de sorte que ladite valve puisse être entourée par la lèvre, et des moyens pour ramener la butée dans sa position initiale lors du retrait de ladite valve. Des moyens pour déformer le joint seront préférablement compris dans le raccord.

Ainsi, les moyens pour déformer le joint peuvent comprendre un couvercle et un corps entre lesquels le joint est disposé, le corps étant mobile relativement au couvercle, de sorte qu'il peut se rapprocher du couvercle en comprimant le joint ou s'éloigner du couvercle en décomprimant le joint. Cela peut se faire grâce des moyens de manoeuvre pour déplacer le corps relativement au couvercle, par exemple à l'aide d'un levier à came qui peut être bloqué dans une première position pour laquelle le joint est peu ou pas déformé ou dans une deuxième position dans laquelle le joint est notablement déformé..

Le joint peut comprendre avantageusement un logement entre un orifice de logement et la lèvre, cet orifice étant prévu pour faire pénétrer la valve dans le logement, et le logement étant apte à se resserrer autour de la valve lorsque le joint est déformé, pour maintenir ladite valve lors du gonflage. De préférence, le joint est un volume de révolution autour d'un axe de révolution et le corps est mobile en translation selon cet axe relativement au couvercle. On pourra aussi prévoir sur le joint une surface postérieure tronconique convexe, opposée à l'orifice de logement du joint, en vis à vis d'une surface antérieure tronconique concave du corps, ainsi lorsque le corps vient comprimer le joint, la déformation du joint est amplifiée de sorte que la lèvre vient se resserrer plus fortement autour de la butée ou de la valve, selon le cas.

Au lieu d'être montée directement sur le pneu, la valve peut être montée sur une chambre à air ou tout autre élément susceptible d'être gonflé. Ainsi, chaque fois que dans un but de simplification du texte on utilise le terme "pneu", il faut comprendre "pneu, chambre à air ou tout autre élément susceptible d'être gonflé".

D'autres particularités et avantages de l'invention ressortiront encore de la description ci-après, relative à des exemples non limitatifs.

Aux dessins annexés :
- la figure 1 est une représentation, en perspective et en coupe, d'un raccord de pompe selon l'invention;
- la figure 2 est une coupe axiale d'un joint d'étanchéité pour le raccord de la figure 1;
- les figures 3 à 5 sont des représentations, en coupe, d'étapes du raccordement du dispositif de la figure 1 à une valve de type Auto;
- la figure 6 est un détail de la figure 5, la valve auto étant raccordée au dispositif.
- les figures 7 à 9 sont des représentations, en coupe, d'étapes du raccordement du dispositif de la figure 1 à une valve de type Vélo.

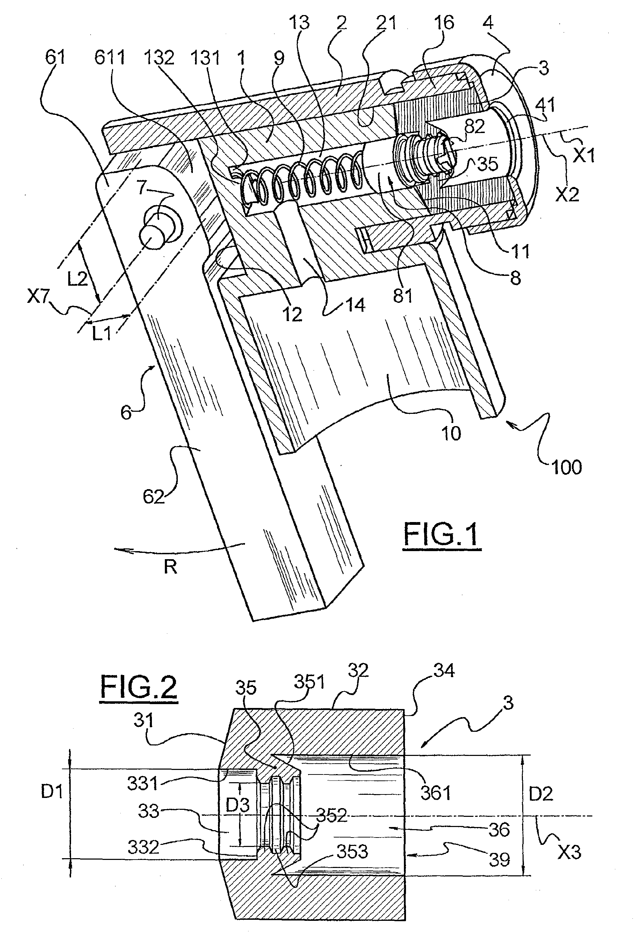

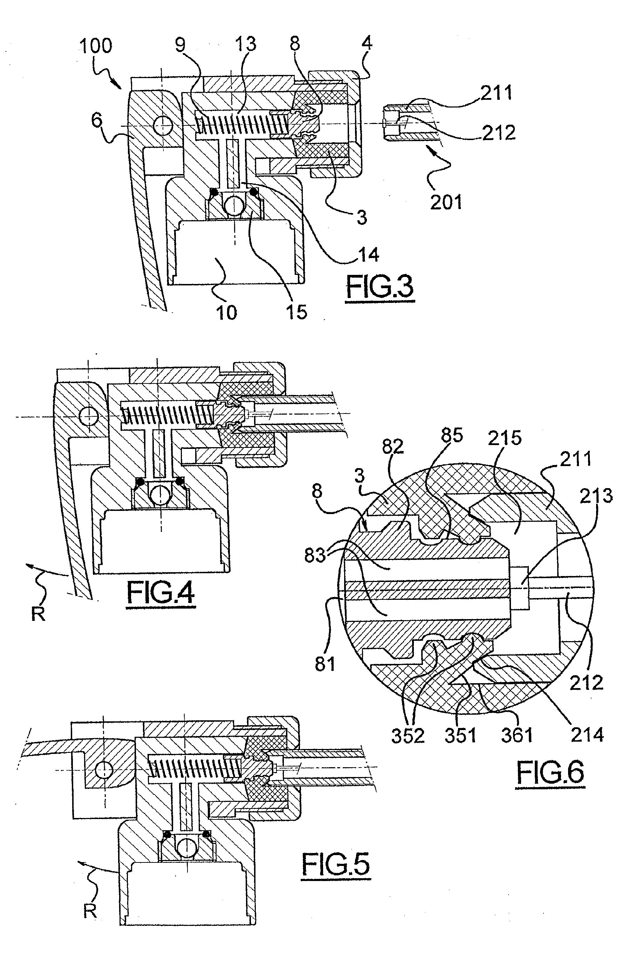

La figure 1 représente un raccord de pompe 100. Il est prévu pour le raccordement d'une pompe sur une valve 201,202 par laquelle peut être admis, dans un pneu, de l'air comprimé produit par la pompe. Il permet le raccordement de la pompe, soit sur une valve auto 201, soit sur une valve vélo 202 (voir figures 3-9). Ce raccord de pompe comprend un corps 1 sensiblement cylindrique autour d'un axe X1 et un boîtier 2. Le boîtier 2 comprend une surface intérieure 21 cylindrique autour d'un axe X2. Le corps 1 est monté dans le boîtier 2, ajusté et coulissant sur la surface intérieure 21 et selon l'axe X1 confondu avec l'axe X2. Une zone de montage 10 s'étend transversalement depuis le corps 1 pour permettre le montage du raccord de pompe 100 sur un ensemble piston/cylindre (non représenté), s'étendant transversalement à l'axe X1, pour constituer la pompe à vélo.

Le corps 1 comprend un conduit cylindrique 13, d'axe X1 et de diamètre D1, ouvert dans une face antérieure tronconique concave 11 du corps et fermé à l'opposé par un fond 131. Un canal 14, s'étendant transversalement à l'axe X1 met en communication le conduit 13 et la zone de montage 10. Ainsi, de l'air sous pression fourni par l'ensemble piston/cylindre peut être acheminé au travers du canal 14 puis du conduit 13 jusqu'au travers de la face antérieure 11 du corps 1.

Le raccord de pompe 100 comprend en outre un joint 3 monté entre, selon l'axe X1, un couvercle annulaire 4 vissé sur le boîtier 2 et la face antérieure 11 du corps 1. Le joint à une forme de révolution autour d'un axe de joint X3. Le joint est monté de sorte que son axe de révolution X3 soit confondu avec l'axe de révolution X1 du corps 1. Le joint 3 est en une matière élastiquement déformable de type élastomère. Le couvercle est percé d'un orifice circulaire 41 pour y faire pénétrer la valve sur laquelle la pompe doit être raccordée.

Une butée creuse 8 est montée coulissante dans le conduit 13. Un ressort hélicoïdal de compression 9, monté comprimé entre la butée creuse 8 et le fond 131, tend à faire échapper la butée creuse 8 du conduit 13 au travers de la face antérieure 11. Le joint 4, est conçu pour empêcher l'échappement de la butée creuse 8 du conduit 13 au travers de la face antérieure 11. Le conduit 13 comprend un ergot 132, s'étendant axialement depuis le fond 131 à l'intérieur du conduit 13, autour duquel s'entoure une extrémité postérieure du ressort 9 pour la positionner transversalement relativement à l'axe X1.

Le raccord de pompe 100 comprend encore un levier 6 qui comprend une came 61 et une poignée 62. Ce levier est monté pivotant autour d'un pivot 7 d'axe X7 perpendiculaire à l'axe X1 et fixe par rapport au boîtier 2. La came 61 comprend une surface de poussée 611 dont les distances à l'axe X7 du pivot varient progressivement d'une première distante L1 à une seconde distance L2, la deuxième distance L2 étant plus grande que la première distance L1. La surface de poussée 611 est disposée de sorte que lorsque la poignée 62 du levier est rabattue parallèlement à l'ensemble piston/cylindre, c'est à dire perpendiculairement à l'axe de révolution X1 du corps 1, la première distance L1 se mesure parallèlement à l'axe X1, et, lorsque la poignée du levier est redressée, parallèlement à l'axe de révolution X1 du corps 1, la deuxième distance L2 se mesure parallèlement à l'axe X1.

Lorsque la poignée est déplacée, en rotation R autour du pivot 7, depuis sa position rabattue vers sa position redressée, la surface de poussée 611 vient en appui sur une face postérieure 12 du corps 1, opposée à sa face antérieure 11 selon son axe X1. Ainsi, le corps 1 se déplace dans le boîtier 2 sous la poussée progressive de la surface de poussée 611 en direction du couvercle 4 de sorte que le joint 3 se trouve comprimé entre la face antérieure 11 du corps 1 et le couvercle 4.

On va maintenant décrire le joint 3, notamment en référence à la figure 2. A la figure 2, ce joint est représenté non comprimé, libre de toute contrainte extérieure. Le joint 3 comprend une surface extérieure 32 cylindrique. Cette surface 31 est ajustée glissante à la surface intérieure 21 du boîtier 2. Le joint est délimité axialement par une surface postérieure de compression 31 convexe, servant de surface d'appui à la surface antérieure 11 du corps 1, et antérieurement par une surface d'appui 34 servant d'appui au joint 3 sur le couvercle 4. La surface de compression 31 est tronconique, de mêmes dimensions que la surface antérieure tronconique 11 du corps 1. la surface d'appui 34 est une surface annulaire plane, perpendiculaire à l'axe X3 du joint, dont le diamètre extérieur est celui de la surface extérieure 32 et le diamètre intérieur D2, sensiblement identique à celui de l'orifice 41 du couvercle 4, est celui d'un orifice de logement 39 pour la pénétration de la valve dans le joint 3. Le diamètre D2 est sensiblement celui d'un embout de valve auto 201 (environ 7,7 mm).

Le joint 3 est percé axialement entre la surface de compression 31 et la surface d'appui 34 par un percement traversant, de forme de révolution complexe et d'axe X3, qui peut être décomposé en trois zones successives. Une première zone 33 est un prolongement axial du conduit 13. Cette première zone est constituée d'une surface de prolongement 331 cylindrique, de même axe et de même diamètre D1 que le conduit 13. Cette surface de prolongement s'étend entre la surface de compression 31 dont elle définit un diamètre intérieur D1, et une surface annulaire de butée 332 s'étendant transversalement à la surface de prolongement 331 en direction de l'axe X3. Cette surface de butée 332 limite l'échappement de la butée 8 au travers de la surface antérieure 11 du corps 1. Une deuxième zone est constituée par une lèvre 35 qui s'étend, vers l'orifice de logement 39, à l'intérieur de la troisième zone 36 définie par une surface de logement 361, s'étendant depuis la lèvre jusqu'à la surface d'appui 34 dont elle définit le diamètre intérieur D2.

La lèvre 35 est définie extérieurement par une surface labiale sensiblement tronconique 351 s'étendant depuis la surface de logement 361 à son extrémité opposée à l'orifice et formant avec la surface de logement 361 un angle aigu. La lèvre 35 est définie intérieurement par une surface complexe s'étendant entre le périmètre intérieur de la surface de butée 332 jusqu'au périmètre intérieur de la surface labiale 351. Cette surface complexe comprend deux reliefs annulaires 352 de section trapézoïdale, s'étendant radialement vers l'axe X3, encadrant une gorge 353, également de section trapézoïdale. Les reliefs 352 définissent un diamètre intérieur D3 pour la lèvre. Le diamètre D3 est sensiblement un diamètre d'un embout de valve vélo 202 (environ 5,2 mm). Une épaisseur quelconque de la lèvre, mesurée transversalement à l'axe X3, est faible relativement à des longueurs de ses surfaces intérieure et labiale, mesurées axialement. En particulier l'épaisseur de la lèvre est nettement inférieure à une épaisseur du joint mesurée entre sa surface extérieure 32 et sa surface de logement 331 ou entre sa surface extérieure 32 et sa surface de prolongement 31. La lèvre a donc une grande souplesse, lui permettant de se déformer plus facilement que des parties plus massives du joint.

On va maintenant décrire la butée 8, notamment en référence aux figures 6 et 1. La butée creuse comprend un guide cylindrique creux 81, de diamètre extérieur D1, permettant le coulissement de la butée dans le conduit 13. Une extrémité antérieure du ressort 9 vient se loger à l'intérieur du guide pour y être positionnée transversalement relativement à l'axe X1 du corps 1. La butée creuse 8 comprend en outre un nez 82, s'étendant depuis le guide creux 81 en direction de l'orifice 41 du couvercle 4. Le nez 82 est creusé de canaux 83 débouchant d'un côté à l'intérieur du guide creux 81 et de l'autre au travers d'une surface frontale 84 du nez. Dans la configuration de la figure 1, c'est à dire la pompe n'étant raccordée à aucune valve et le levier 6 étant rabattu, la lèvre 35 est située autour du nez 82 de la butée 8.

On notera ainsi que dans la configuration de la figure 1, l'air sous pression fourni par l'ensemble piston/cylindre est acheminé d'abord au travers du canal 14, remonte le conduit 13, puis pénètre dans la butée 8 par le guide creux 81, entre dans les canaux 83 pour sortir de la butée creuse dans le logement 36 avant d'être éjecté de la pompe au travers des orifices 39 puis 41, constituant ainsi un circuit pour la circulation de l'air dans le raccord de pompe. Le couvercle 4 est vissé sur une tête 16 du boîtier 2. Ainsi, il est possible d'ajuster par vissage du couvercle 4 une distance entre le couvercle et l'axe X7 du pivot. Cette distance est avantageusement choisie pour que dans la position rabattue du levier 6 le corps et le joint 3 soient bloqués entre la came 61 et le couvercle 4 tout en s'assurant que la pression exercée axialement sur le joint 3 soit nulle ou faible, c'est à dire que le joint 3 est pas ou peu déformé. Ainsi le contact entre la face antérieure d'appui 34 du joint 3 et le couvercle assure l'étanchéité autour de l'orifice 41 du couvercle 4 et le contact entre la face de compression 31 du joint 3 et la face antérieure 11 du corps 1 y assure l'étanchéité. Ainsi, même lorsque le levier est rabattu, l'étanchéité à l'air est assurée le long du circuit pour la circulation de l'air dans le raccord de pompe.

En référence aux figures 3 à 6, on va maintenant décrire le fonctionnement du raccord de pompe 100 lors de son raccordement à une valve auto 201. La valve auto 201 est représentée partiellement sur les figures. Elle est montée sur un pneu dont elle permet le gonflement. Elle comprend un embout 211 qui définit un passage 215 pour l'air entre l'extérieur du pneu et le pneu. La valve auto 201 comprend un clapet de valve (non représenté) évitant le dégonflement du pneu au travers du passage. La valve auto 201 comprend selon l'axe de l'embout, dans le passage d'air, une tige 212 qui permet de commander l'ouverture du clapet en appuyant sur une extrémité 213 de la tige 212, accessible depuis l'extérieur de l'embout. L'embout 211 comprend autour du passage 215, à une extrémité débouchant sur l'extérieur du pneu, c'est à dire sur un bord intérieur de cette extrémité, un chanfrein intérieur conique 214.

Comme illustré à la figure 3, lorsque l'embout 211 est présenté devant le raccord 100, celui-ci est dans la position de la figure 1, levier 6 rabattu. Comme illustré à la figure 4, on fait ensuite pénétrer l'embout 211 selon l'axe X1 au travers des orifices 41 puis 39 dans le logement 36 du joint 3. L'embout pénètre entre la lèvre 35 et la surface de logement 361, et le chanfrein 214 prend appui sur la surface labiale 351, ce qui tend à repousser la lèvre 35 vers l'axe X3 du joint, enserrant et immobilisant ainsi le nez 82 de la butée 8, tandis que la surface frontale 84 de la butée 8 vient en contact avec l'extrémité 213 de la tige 212 qui s'enfonce axialement dans le passage 215. C'est à dire que l'immobilisation de la butée permet de manoeuvrer la tige 212. Le clapet de la valve est ainsi ouvert mettant en communication l'intérieur du pneu et le circuit de circulation d'air 83,81,13,14 dans le raccord 100. Si la pression dans le pneu est supérieure à la pression dans le cylindre de la pompe, un clapet à bille 15, entre le circuit et le cylindre est maintenu fermé jusqu'à ce que la pression dans le cylindre, lors du pompage, devienne supérieure à celle dans le pneu.

Le redressement du levier 6, en déplaçant le corps 1 et en comprimant le joint 3 entre le corps 1 et le couvercle 4, a plusieurs actions sensiblement simultanées. Une première action est de renforcer l'action de la butée 8 sur l'extrémité 213 de la tige en augmentant la compression du ressort 9 entre le fond 131 qui se déplace avec le corps 1 et la butée 8 qui reste sensiblement immobile. En comprimant le joint 3, la surface frontale conique 11 du corps 1, en appuis sur la surface de compression 31, également conique, du joint tend à déformer le joint de sorte qu'il se resserre radialement autour de son axe X3 en même temps qu'axialement. Ainsi, la deuxième action est de déformer radialement et axialement la lèvre 35, pincée entre le chanfrein 214 et le nez 82 de la butée 8. On note que le nez 82 comprend sur une surface extérieure des formes complémentaires à la celles 352,353 de la surface complexe de la lèvre 35 qui vient s'y appliquer en s'y déformant. On assure ainsi le maintient de la butée 8 et une étanchéité entre le circuit d'air et la valve pendant le gonflage, c'est à dire que les reliefs 352 viennent s'imbriquer dans des gorges complémentaires de la surface extérieure 85 du nez 82 en s'y cramponnant, et que la lèvre 35, pincée entre cette surface extérieure 85 et le chanfrein 214, y sert de joint d'étanchéité. En comprimant le joint 3, la troisième action est de resserrer la surface de logement 361 autour de l'embout 211, assurant une bonne tenue de la valve pendant le gonflage et ainsi une autre étanchéité entre le circuit d'air et la valve pendant le gonflage. Cette autre étanchéité peut être suffisante, l'étanchéité assurée par la lèvre n'étant dans ce cas que complémentaire.

A la fin du gonflage, pour libérer la valve auto 201, il suffit de rabattre le levier 6 pour que le joint reprenne élastiquement sa forme et de retirer le raccord 100 de la valve.

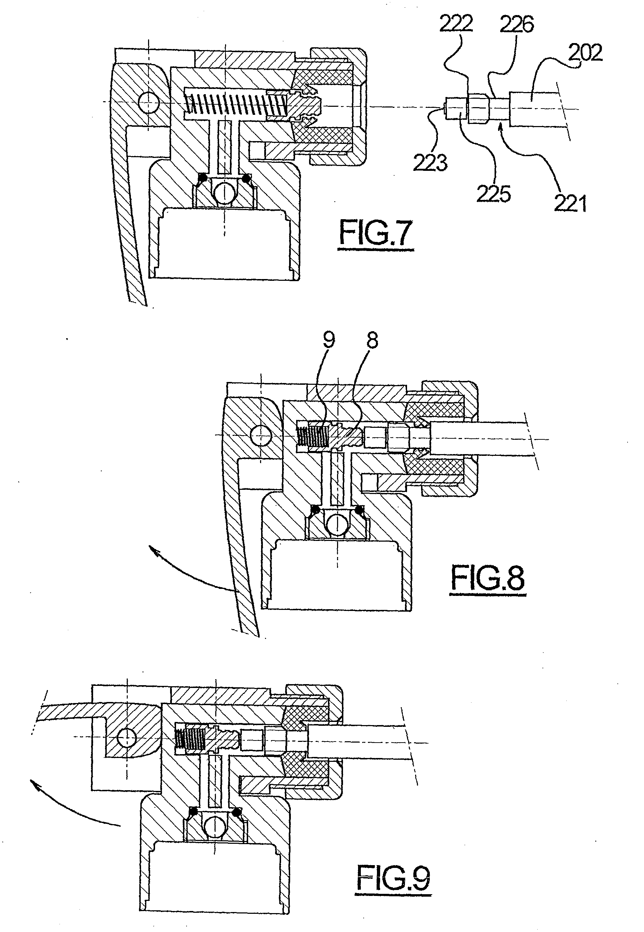

En référence aux figures 7 à 9, on va maintenant décrire le fonctionnement du raccord de pompe 100 lors de son raccordement à une valve vélo 202. La valve vélo 202 est représentée partiellement sur les figures. Elle est montée sur un pneu dont elle permet le gonflement. Elle comprend un embout 221 définit un passage pour l'air entre l'extérieur du pneu et le pneu. La valve vélo 202 comprend un clapet de valve évitant le dégonflement du pneu au travers du passage. La valve vélo 202 comprend selon l'axe de l'embout, dans le passage d'air, une tige 222 qui permet par son enfoncement dans l'embout, de commander l'ouverture du clapet en appuyant sur une extrémité 223 de la tige 222, accessible depuis l'extérieur de l'embout. Un écrou 225, monté vissé sur la tige, permet de bloquer la tige en prenant appui sur l'embout de sorte que si l'on appuie accidentellement sur son extrémité 223, la tige ne puisse commander l'ouverture du clapet de la valve, déclenchant ainsi le dégonflement accidente! du pneu. Il convient donc de dévisser l'écrou 225 pour permettre la circulation de l'air dans le passage en vue du gonflement du pneu. Il est à noter que l'écrou est configurer pour permettre le passage de l'air entre le passage dans l'embout 221 et l'extérieur du pneu lorsque la tige est enfoncée et l'écrou en appui sur l'embout.

Comme illustré à la figure 7, lorsque l'embout 221 est présenté devant le raccord 100, celui-ci est dans la position de la figure 1, levier 6 rabattu. Comme illustré à la figure 8, on fait ensuite pénétrer l'embout 221 selon l'axe X1 au travers des orifices 41 puis 39 dans le logement 36 du joint 3. l'extrémité 223 de la tige 222 vient en contact avec la surface antérieure 84 de la butée. A mesure de la pénétration de l'embout 221 dans le logement 36, la tige 222 s'enfonce progressivement de sorte que le clapet de la valve vélo 202 est progressivement ouvert. Lorsque l'écrou 225 vient en appui sur l'embout 221, la tige, ainsi bloquée, cesse de s'enfoncer dans l'embout. Alors que l'embout 221 continu de pénétrer dans le logement 36, puis au-delà entre la lèvre 35 du joint 3, l'extrémité 223 de la tige repousse progressivement la butée dans le conduit 13, jusqu'à ce que le ressort soit complètement comprimé, bloquant ainsi la pénétration de l'embout 221. Le raccord de pompe 100 est conçu pour que dans cette position représentée aux figures 8 et 9, le bouchon se trouve dans le conduit 13, au-delà de la surface frontale 11 du corps 1.

Un nouveau circuit d'air 13,14 est établi dans le raccord 100, mettant en contact l'air à l'intérieur du pneu avec l'air dans le conduit 13, au travers de l'écrou 225. Si la pression dans le pneu est supérieure à la pression dans le cylindre de la pompe, le clapet à bille 15 est maintenu fermé jusqu'à ce que la pression dans le cylindre, lors du pompage, devienne supérieure à celle dans le pneu.

Le redressement du levier 6, en déplaçant le corps 1 et en comprimant le joint 3 entre le corps 1 et le couvercle 4, permet de resserrer la lèvre sur l'embout 221 de la valve vélo, notamment par l'action déjà décrite des surfaces coniques du corps 1 et du joint 3.

Le raccord de pompe 100 est conçu pour que dans cette position représentée à la figure 9, la lèvre 35 soit resserrée autour d'une zone 226 de l'embout 221 favorable pour y faire étanchéité lors du gonflage. En particulier, on s'assure que la lèvre ne vient pas se resserrer autour du filetage utilisé pour y visser un raccord souple d'une pompe à vélo traditionnelle de l'art antérieur. De préférence, le diamètre intérieur D3 de la lèvre et celui de la zone 222 devront être sensiblement égaux. La lèvre, ainsi resserrée, assure l'étanchéité entre le conduit 13 et la valve vélo 202, conjointement à la bonne tenue de la valve, pendant le gonflage. La butée 8, toujours bloquée entre le ressort 9 et l'extrémité 223 de la tige 222 de la valve, permet de maintenir ouvert le clapet de la valve vélo afin de permettre la pénétration dans le pneu de l'air sous pression fourni par la pompe à vélo.

A la fin du gonflage, pour libérer la valve vélo 202, il suffit de rabattre le levier 6 et de retirer le raccord 100 de la valve.

On constate ainsi qu'un opérateur de pompage n'a pas à se soucier du type de valve, auto ou vélo, qui équipe le pneu. En effet, les opérations de pompage sont les mêmes quel que soit le type de valve. Ces opérations sont successivement l'enfoncement en butée de la valve dans le raccord de pompe puis le redressement du levier, le pompage et enfin la libération de la valve en rabattant le levier.

Bien sûr, l'invention n'est pas limitée aux exemples qui viennent d'être décrits et de nombreux aménagements peuvent être apportés à ces exemples sans sortir du cadre de l'invention.

Un tel raccord n'est pas limité au raccord sur des valves auto ou vélo des types précédemment décrits mais peut être adapté à d'autres types de valves existants ou à venir. En particulier, les diamètres D1, D2 et D3 peuvent être différents selon les diamètres des valves auxquelles la pompe doit être raccordée. Il n'est pas non plus limité à servir de raccord de pompe uniquement sur des pompes à vélo.

Au lieu que le raccord soit monté sur un ensemble piston/cylindre d'une pompe manuelle, il peut aussi être directement monté sur une arrivée souple d'un poste de fourniture en air comprimé tel ceux disponibles dans les stations services.

Les moyens de manoeuvre peuvent aussi être formés d'autres moyens qu'un levier à came, par exemple une vis pour enfoncer plus ou moins le corps dans le boîtier.

Le joint peut comprendre, en partie ou en totalité, d'autres matériaux qu'un matériau élastomère, notamment un matériau thermoplastique ou un caoutchouc.

Le couvercle peut ne pas être vissé sur le boîtier mais en être une partie intégrante.

## Revendications

1. Raccord (100) pour raccorder un dispositif de gonflage sur une valve (201,202), comprenant une butée creuse (8) pour manoeuvrer des moyens d'ouverture (212,222) de la valve, un joint (3) élastiquement déformable, **caractérisé en ce que** le joint comprend une lèvre (35) adaptée pour immobiliser la butée lors du gonflage, si ladite valve (201) est d'un premier type, ou assurer en se déformant une étanchéité autour (226) de la valve (202), lors du gonflage, si ladite valve est d'un deuxième type, une arrivée d'air depuis le dispositif de gonflage jusqu'à la valve se faisant au travers de la butée creuse, **caractérisé en ce que** la lèvre assure en outre une étanchéité entre un bord intérieur (214) de la valve (201) et ladite butée, si ladite valve est du premier type.

2. Raccord selon la revendication 1, **caractérisé en ce qu'**il comprend un conduit (13) pour l'air dans lequel la butée (8) est montée mobile.

3. Raccord selon la revendication 2, **caractérisé en ce que** lorsque aucune valve n'est raccordée la lèvre entoure la butée dans une position initiale, et, comprend des moyens (9) pour escamoter la butée dans le conduit lors d'un raccordement à une valve (202) du deuxième type, de sorte que ladite valve puisse être entourée par la lèvre, et des moyens (9) pour ramener la butée dans sa position initiale lors du retrait de ladite valve (202).

4. Raccord selon l'une des revendications précédentes, **caractérisé en ce que** le joint comprend, un logement (36) entre un orifice de logement (39) et la lèvre, ledit orifice étant prévu pour faire pénétrer la valve dans le logement, et ledit logement étant apte à se resserrer autour de la valve lorsque le joint est déformé, pour maintenir ladite valve lors du gonflage.

5. Raccord selon l'une des revendications précédentes, **caractérisé en ce qu'**il comprend des moyens (6,1,4) pour déformer le joint.

6. Raccord selon la revendication précédente, **caractérisé en ce que** les moyens pour déformer le joint comprennent un couvercle (4) et un corps (1) entre lesquels le joint est disposé, le corps étant mobile relativement au couvercle, de sorte qu'il peut se rapprocher du couvercle en comprimant le joint ou s'éloigner du couvercle en décomprimant le joint.

7. Raccord selon la revendication précédente, **caractérisé en ce que** les moyens pour déformer le joint comprennent en outre des moyens de manoeuvre pour déplacer (6) le corps relativement au couvercle.

8. Raccord selon la revendication précédente, **caractérisé en ce que** les moyens de manoeuvre (6) sont constitués d'un levier à came qui peut être bloqué dans une première position pour laquelle le joint est peu ou pas déformé ou dans une deuxième position dans laquelle le joint est notablement déformé.

9. Raccord selon l'une des revendications 6 à 8, **caractérisé en ce que** le joint est un volume de révolution autour d'un axe de révolution (X3) et que le corps est mobile en translation selon ledit axe relativement au couvercle.

10. Raccord selon la revendication précédente, **caractérisé en ce que** ledit joint comprend une surface postérieure tronconique convexe (31), opposée à l'orifice de logement (39) du joint, en vis à vis d'une surface antérieure tronconique concave (11) du corps (1).

11. Raccord selon l'une des revendications 6 à 10, **caractérisé en ce que** le joint comprend un percement axial traversant, à l'intérieur duquel la lèvre s'étend en direction de l'orifice du joint.

12. Raccord selon l'une des revendications 6 à 11, **caractérisé en ce que** la lèvre comprend des reliefs, adaptés pour se cramponner sur des reliefs complémentaires prévus sur la butée, afin de maintenir la butée lors du raccordement avec une valve du premier type.

13. Raccord selon l'une des revendications 6 à 12, **caractérisé en ce qu'**un diamètre intérieur (D3) de la lèvre est sensiblement égal à un diamètre extérieur d'une valve du deuxième type.

14. Raccord selon l'une des revendications 5 à 13, **caractérisé en ce que** le logement est compris dans le percement, cylindrique et de diamètre intérieur (D2) sensiblement égal à un diamètre extérieur d'une valve du premier type.

15. Raccord selon l'une des revendications précédentes, **caractérisé en ce que**, dans le cas du raccordement à une valve du premier type, le resserrement de la lèvre immobilise la butée de sorte que ladite butée puisse manoeuvrer les moyens d'ouverture.

16. Raccord selon l'une des revendications précédentes, **caractérisé en ce que** le joint comprend une matière élastomère ou thermoplastique ou du caoutchouc.

17. Raccord selon l'une des revendications précédentes, **caractérisé en que** le premier type correspond aux valves de type auto (201).

18. Raccord selon l'une des revendications précédentes, **caractérisé en ce que** le deuxième type correspond aux valves de type vélo (202).
